# EUROPÄISCHE PATENTSCHRIFT

(11) **EP 1 412 116 B1**
(45) Veröffentlichungstag und Bekanntmachung des Hinweises auf die Patenterteilung: **26.04.2006**
(21) Anmeldenummer: 02751156.7
(22) Anmeldetag: 22.07.2002
(51) Int. Cl.: B23B 31/20

(54) **WECHSELVORRICHTUNG FÜR SPANNKÖPFE MIT MEHREREN SPANNBACKEN**
EXCHANGE DEVICE FOR GRIP HEADS COMPRISING A PLURALITY OF CLAMPING JAWS
DISPOSITIF D'ECHANGE DE TETES DE SERRAGE COMPORTANT PLUSIEURS MACHOIRES DE SERRAGE

(30) Priorität: 27.07.2001 DE 10138343
(43) Veröffentlichungstag der Anmeldung: 28.04.2004
(73) Patentinhaber: HAINBUCH GMBH SPANNENDE TECHNIK, D-71672 Marbach (DE)
(72) Erfinder: WELLER, Hans-Michael, 71672 Marbach (DE); HETSCHEL, Wilhelm, 74336 Brackenheim (DE)
(74) Vertreter: Renger, Florian
(86) Internationale Anmeldenummer: PCT/EP2002/008162
(87) Internationale Veröffentlichungsnummer: WO 2003/011504

(56) Entgegenhaltungen:
- DE-A- 2 831 140
- US-A- 2 277 816

## Beschreibung

### Anwendungsgebiet und Stand der Technik

Die vorliegende Erfindung betrifft eine Wechselvorrichtung für Spannköpfe mit mehreren Spannbacken. Bei Drehmaschinen ist es bekannt, zweiteilig ausgebildete Spannzangen zu verwenden. Derartige Spannzangen bestehen zum einen aus einem Spannrohrteil und einem Spannkopf. Ober eine Kopplungsvorrichtung kann das Spannrohr mit dem Spannkopf in axialer Richtung miteinander gekoppelt werden und im Bedarfsfalle voneinander getrennt werden.

Zum Kuppeln und Entkuppeln von Spannkopf an der Spannzange sind Wechselvorrichtungen bekannt.

Eine Wechselvorrichtung für derartige Spannköpfe ist beispielsweise aus der DE 28 31 140 C2 bekannt. Eine dort beschriebene Wechselvorrichtung für Spannköpfe umfasst eine Trägerplatte mit einer Bohrung. Bezüglich der Trägerplatte axial versetzt sind Schwenkarme konzentrisch zur Bohrung mittels eines Gelenks an der Trägerplatte angelenkt. Das Gelenk ist so ausgerichtet, dass die Schwenkarme in einer radial zur Bohrungsachse verlaufenden Ebene schwenkbar sind. Die Schwenkarme weisen Koppelglieder zur Kopplung der Wechselvorrichtung an den Spannbacken des Spannkopfes auf. Mittels eines axial beweglichen Zugbolzens wird an den Schwenkarmen angegriffen. Der Zugbolzen durchsetzt dabei die Trägerplatte.

Die Wechselvorrichtung dient dazu, die Wechselvorrichtung an dem Spannkopf anzusetzen und mittels der Koppelglieder eine Verbindung zwischen der Wechselvorrichtung und den Spannbacken auszubilden. Anschließend wird die Betätigung durchgeführt, die dazu führt, dass die Verbindung zwischen Spannkopf und Spannrohr gelöst wird bzw. wieder hergestellt werden kann.

Dabei erfolgt die Betätigung der Wechselvorrichtung gemäß der dargestellten Ausführungsform beispielweise über ein Handrad. Das Handrad weist auf seiner Innenseite ein Gewinde auf, das an dem Zugbolzen seine Entsprechung findet. Durch Drehen an dem Handrad wird der Zugbolzen entweder weiter in die Trägerplatte hineingezogen und von dem Spannkopf entfernt. Hierbei erfolgt eine Schwenkbewegung der Schwenkarme und damit eine Betätigung der Spannbacken, die ein Lösen des Spannkopfes von dem Spannrohr ermöglicht. Beim Drehen des Handrades in der entgegengesetzten Richtung erfolgt eine gegenläufige Betätigung des Zugbolzens, dieser wird wieder in seine ursprüngliche Ausgangsstellung verfahren. Somit ist ein Lösen der Wechselvorrichtung von dem Spannkopf wieder möglich. Dabei ist der Spannkopf entweder wieder gesichert im Spannrohr gehalten oder aber in einer vom Spannrohr entfernten Stellung, so dass er manuell handhabbar ist.

Neben dieser Form der manuellen Betätigung der Wechselvorrichtung sind auch unterschiedliche Formen der Fremdkraftbetätigung beispielsweise über pneumatische oder hydraulische Stellzylinder möglich. Eine solche pneumatische oder hydraulische Betätigung des Stellzylinders setzt immer voraus, dass an der jeweiligen Maschine, bei der die Wechselvorrichtung verwendet werden soll, eine entsprechende fluidische Fremdkraftquelle mit Anschlussmöglichkeit vorhanden ist.

Gegenüber dieser Form der fremdkraftgesteuerten Betätigung ist eine manuelle Betätigung also eine vereinfachte und überall einsetzbare Variante. Die manuelle Betätigung ist unabhängig von den Gegebenheiten der einzelnen Maschine möglich. Ein besonderer Kraftanschluss wird nicht benötigt. Dabei ist es bei einer manuellen Betätigung notwendig, hohe Betätigungskräfte in den Spannkopf einzuleiten, um ein Lösen des Spannkopfes aus dem Spannrohr heraus zu ermöglichen. Das Einleiten dieser Kräfte erfolgte bei bisherigen manuellen Wechselvorrichtungen über ein Schraubgewinde mittels eines Handrades. Dies ist zum einen dann nachteilig, wenn zur Betätigung der Vorrichtung beide Hände zum Einsatz gelangen müssen, beispielsweise eine Hand zum Ansetzen und Halten des Gerätes und die andere Hand zum Betätigen des Handrades. Darüber hinaus ist es oftmals ungünstig, Drehbewegungen im Inneren des Maschinenraumes durchzuführen. Dies gilt insbesondere bei Mehrspindelmaschinen, bei denen eine Vielzahl von Werkzeugen in den Maschinenraum hineinragt und bei denen die räumliche Anordnung der Spannköpfe für das Einspannen der Werkstücke begrenzt ist.

### Aufgabe und Lösung

Es ist Aufgabe der Erfindung, eine eingangs genannte Wechselvorrichtung zu schaffen, bei der eine vereinfachte Bedienung und eine größere Arbeitssicherheit ermöglicht wird.

Diese Erfindung wird gelöst durch eine Wechselvorrichtung mit den Merkmalen des Anspruches 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Eine erfindungsgemäße Wechselvorrichtung für Spannköpfe mit mehreren Spannbacken besteht aus einer Trägerplatte mit einer Bohrung. Bezüglich der Trägerplatte axial versetzt sind Schwenkarme konzentrisch zur Bohrung angeordnet. Sie sind mittels eines Gelenkes derart angelenkt, dass sie in einer Ebene verschwenkbar sind, welche die Bohrungsachse umfasst. Dabei verläuft die Schwenkbewegung radial zur Bohrungsachse. An den Schwenkarmen sind Koppelglieder angeordnet, mittels derer die Wechselvorrichtung an den Spannbacken des Spannkopfes ankoppelbar und wieder lösbar ist. Darüber hinaus weist die Wechselvorrichtung einen axial beweglichen, in der Bohrung der Trägerplatte angeordneten Zugbolzen auf, der an den Schwenkarmen angreift. Daher wird über die Position des Zugbolzens die radiale Schwenklage der Schwenkarme beeinflusst.

Zur manuellen Betätigung der Wechselvorrichtung sind Betätigungshebel vorgesehen. Ein erster Betätigungshebel ist dabei bezüglich der Träger platte feststehend angeordnet. Der zweite Betätigungshebel ist gegenüber dem ersten drehbeweglich angeordnet und greift wenigstens mittelbar an dem Zugbolzen an.

Gemäß bevorzugter Ausgestaltung sind die Betätigungshebel von einer Ausgangsstellung in eine Betätigungsendlage überführbar. In der Ausgangsstellung sind die Betätigungshebel weit voneinander beabstandet. Sie sind insbesondere soweit voneinander beabstandet, dass sie gerade noch mit den Händen bzw. mit einer Hand umgriffen werden können. Die Betätigungshebel sind in eine Betätigungsendlage überführbar. Darin sind die Betätigungshebel einander benachbart.

Das Oberführen der Betätigungshebel von der Ausgangslage in die Betätigungsendlage kann dabei durch eine Relativbewegung des zweiten Betätigungshebels relativ zum ersten Betätigungshebel erfolgen. In einer Ausgangsstellung der manuell betätigbaren Betätigungshebel kann die Wechselvorrichtung über Koppelglieder mit dem Spannkopf in Eingriff bringbar bzw. dieser Eingriff wieder aufhebbar sein. Somit kann in der Ausgangsstellung der Betätigungshebel die Wechselvorrichtung an den Spannkopf angesetzt werden bzw. wieder vom Spannkopf gelöst werden. In der Betätigungsendlage der Betätigungshebel ist ein derartiger Eingriff am Spannkopf möglich derart, dass dieser von seiner maschinenseitigen Halterung ankoppelbar oder abkoppelbar ist, wobei in der Regel der Spannkopf am Spannrohr gehalten ist.

Die Verbindung zwischen Spannkopf und maschinenseitiger Halterung kann dabei als in der maschinenseitigen Halterung eingebrachte Nut ausgebildet sein, die von entsprechenden Haltezungen an den einzelnen Spannbacken des Spannkopfes hintergriffen wird. Diese hintergreifende Verbindung wird vorzugsweise dadurch aufgehoben, dass die Spannbacken relativ zueinander bewegt werden. Dabei erfolgt eine elastische Verformung des elastomerischen Materials, das die Spannbacken im Bereich der Schlitze zwischen den Spannbacken verbindet.

Gemäß einer vorteilhaften Ausgestaltung der Erfindung ist der zweite Betätigungshebel um eine parallel zur Bohrung verlaufende Drehachse bezüglich des ersten Betätigungshebels drehbar. Dabei ist der zweite Betätigungshebel insbesondere koaxial zur Bohrung drehbar. Hierbei ist gemäß bevorzugter Ausgestaltung der zweite Betätigungshebel an einem Drehring abragend ausgebildet, wobei der Drehring über wenigstens zwei Hebel wenigstens mittelbar an der Trägerplatte abgestützt ist. Die Hebel dienen der Führung der Drehbewegung und der Erzeugung eines axialen Verfahrweges des Zugbolzens gegenüber der Trägerplatte, wenn eine Betätigung des Betätigungshebels erfolgt.

Die Anzahl der verwendeten Hebel beträgt insbesondere drei. Sie sind dabei vorzugsweise in gleichem Abstand und gleichmäßig verteilt bezüglich der Mittelachse der Bohrung angeordnet. Die Hebel können dabei insbesondere jeweils an ihren beiden Enden einen Kugelkopf aufweisen, der in einer entsprechenden Pfanne in der Trägerplatte bzw. in dem Drehring gehalten ist.

Gemäß weiterführender Ausgestaltung sind die Hebel an ihren beiden Enden so gehalten, dass sie sich bei Betätigung der Betätigungshebel aus der Ausgangsstellung in Richtung auf die Betätigungsendlage aufbäumen und den Abstand zwischen Trägerplatte und Drehring vergrößern. Der Zugbolzen, der insbesondere mit dem Drehring feststehend verbunden ist, führt damit eine Translation bezüglich der Bohrung in der Trägerplatte aus. Über diese Stellbewegung des Zugbolzens wird ein Verschwenken der Schwenkarme erzeugt

Gemäß einer weiteren erfindungsgemäßen Ausgestaltung ist der zweite Betätigungshebel um eine senkrecht zur Bohrungsachse verlaufende Drehachse bezüglich des ersten Betätigungshebels drehbar. Hier kann insbesondere vorgesehen sein, dass zwischen dem ersten und zweiten Betätigungshebel eine Kniehebelanordnung ausgebildet ist. Die Kniehebelanordnung dient dabei insbesondere der Führung der Betätigungsbewegung des zweiten Betätigungshebels gegenüber dem ersten Betätigungshebel, welcher bezüglich der Trägerplatte feststehend angeordnet ist. Vorzugsweise ragt der erste Betätigungshebel von einem an der Trägerplatte in axialer Verlängerung der Bohrung angeordneten Rohrabschnitt radial ab.

Eine Kniehebelanordnung weist vorzugsweise zwei Kniehebelschenkel auf. Der zweite Betätigungshebel ist dabei über den längeren der beiden Hebelschenkel mit dem Zugbolzen verbunden. Gemäß einer Ausgestaltung der Erfindung ist in die Bohrung eine Hülse eingesetzt. Der Zugbolzen ragt in den Rohrabschnitt hinein und weist zwei parallel zueinander verlaufende, einander diametral gegenüberliegende Langlöcher sowie eine Ausnehmung in dem dazwischenliegenden Bereich auf. Der Zugbolzen ist gegenüber dem Achsbolzen längsverschiebbar im Rohrabschnitt angeordnet. Der Achsbolzen durchsetzt den zweiten Betätigungshebel in einem gewissen Abstand von dem Lagerauge des längeren Hebelschenkels. Dieser Abstand bildet den kürzeren Hebelschenkel der Kniehebelanordnung. Bei einer derartigen Anordnung ist der zweite Betätigungshebel also einerseits durch die Ausbildung der Langlöcher in der Hülse geführt und andererseits über den längeren Hebelschenkel bezüglich des Rohrabschnitts in einem feststehend zur Trägerplatte ausgebildeten Bereich festgelegt. Hierdurch wird die Schwenkbewegung des zweiten Betätigungshebels bezüglich des ersten Betätigungshebels festgelegt.

Es ist vorgesehen, eine in den Rohrabschnitt einsetzbare Hülse in diesem Rohrabschnitt sicher zu haltern, um einen Sicherungsbolzen bezüglich seiner eigenen Längsachse sicher sowie den Zugbolzen innerhalb des Rohrabschnittes zu führen. Gemäß bevorzugter Ausgestaltung ist dieser Sicherungsbolzen zugleich das Drehlager des längeren Betätigungshebels am Zugbolzen.

Darüber hinaus kann vorgesehen sein, dass der zweite Betätigungshebel über eine abgerundete Abwälzkante an der Innenfläche der Hülse abgestützt ist.

Bei Kniehebelanordnungen ist es von Vorteil, wenn die drei Schwenkachsen der Kniehebelanordnung in der Betätigungsendlage wenigstens nahezu in einer Ebene liegen. Dabei verläuft diese Ebene vorzugsweise in der Mittelebene der Langlöcher der Kniehebelanordnung.

Bei allen Anordnungen kann es vorgesehen sein, dass zwischen erstem und zweitem Betätigungshebel eine Rückstellfeder angeordnet ist, die den zweiten Betätigungshebel derart beaufschlagt, dass er selbsttätig in die Ausgangsstellung zurückfährt. Femer ist es sowohl möglich, dass der Schwenkhebel nur in Zugrichtung, also in der Krafteinleitungseinrichtung, von Kräften von dem Betätigungshebel auf den Zugbolzen an den Schwenkhebeln abgestützt ist, als auch dass der Zugbolzen sowohl in Zugrichtung als auch in Schubrichtung dort abgestützt ist. Die Abstützung in beiden Richtungen ermöglicht es, dass die Schwenkhebel beim Zurückfahren der Betätigungshebel in die Ausgangsstellung auch wieder in die Ausgangsstellung verbracht werden, in der sie an entsprechenden Spannköpfen ankoppelbar sind. Zur Festlegung der Ausgangsstellung der Schwenkhebel ist eine Abstützung in Zug- und Schubrichtung am Zubolzen dann nicht erforderlich, wenn zwischen Schwenkhebel und Trägerplatte entsprechende Rückstellmittel angeordnet sind. Diese Rückstellmittel können auch gleichzeitig als Rückstellmittel für die Betätigungshebel dienen, da sie mittelbar über den Betätigungsbolzen auf die Betätigungsmittel zurückwirken. Sie sind auch geeignet, die ursprüngliche Ausgangsstellung wieder herzustellen.

### Kurzbeschreibung der Zeichnungen

Die Erfindung ist auch anhand der in den Zeichnungen dargestellten Ausführungsbeispielen näher erläutert; dabei zeigen:
- Fig. 1-4:: jeweils in Seitenansicht und Aufsicht eine erste Ausführungsform einer erfindungsgemäßen Wechselvorrichtung, wobei die Wechselvorrichtung an einen Spannkopf angekoppelt ist; und
- Fig. 5 und Fig. 6: in teilgeschnittener Darstellung eine zweite Ausführungsform einer erfindungsgemäßen Wechselvorrichtung in unbetätigter bzw. in betätigter Stellung der Wechselvorrichtung ohne Darstellung eines Spannkopfes.

### Detaillierte Beschreibung der Ausführungsbeispiele

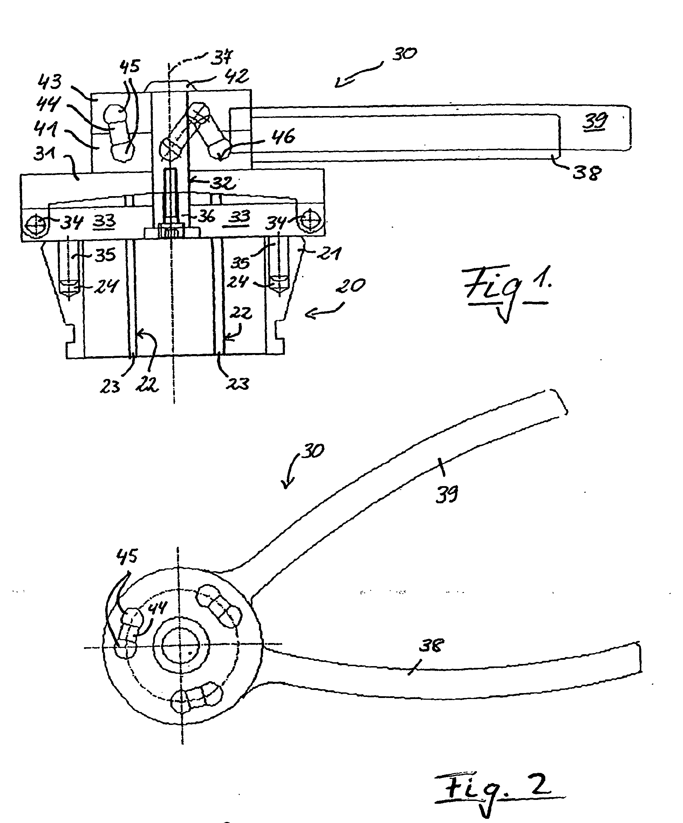

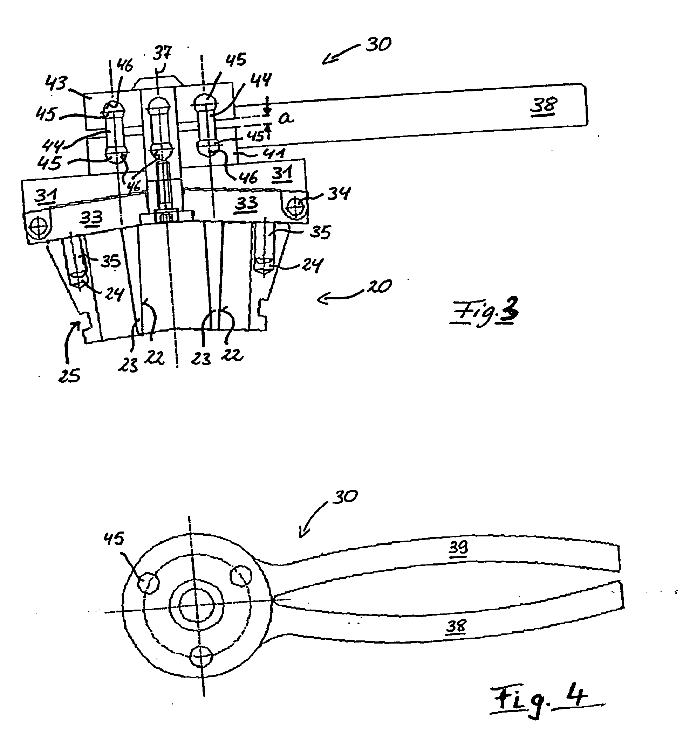

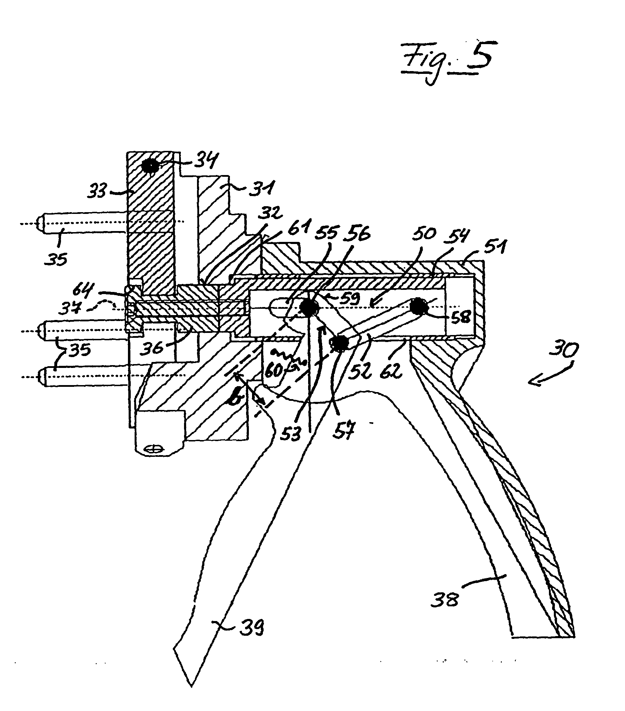

Die Fig. 1 und 2 zeigen in unbetätigter Ausgangsstellung eine erste Ausführungsform einer Wechselvorrichtung 30. Die Fig. 3 und 4 zeigen die gleiche Wechselvorrichtung 30 in der Betätigungsendlage. Dabei ist in der oberen Bildhälfte jeweils eine teilgeschnittene schematische Seitenansicht in Fig. 1 bzw. Fig. 3 dargestellt, während in der unteren Bildhälfte in Fig. 2 bzw. Fig. 4 die Aufsicht in ebenfalls schematischer teilgeschnittener Darstellung gezeigt ist

Die Wechselvorrichtung 30 ist an einen Spannkopf 20 angekoppelt. Der Spannkopf 20 besteht aus mehreren Spannbacken 21, die durch Schlitze 22 voneinander getrennt sind. In den Schlitzen 22 sind Verbindungskörper 23 angeordnet. Die Verbindungskörper 23 sind dabei aus elastisch verformbarem Material, insbesondere gummielastisch verformbarem Material, wie beispielsweise natürliche und künstliche Kautschuke mit unterschiedlichen, die Materialeigenschaften oder Farbe beeinflussenden Additiven. Die Verbindungskörper können dabei insbesondere durch verkleben und/oder anvulkanisieren, aber auch durch andere Befestigungstechniken an den beiden benachbarten Spannbacken 21 kraft- und/oder formschlüssig befestigt sein. Die Verbindungskörper 23 können dabei die gesamten Schlitze 22 ausfüllen, so dass nach außen hin nahezu ein Körper mit einer geschlossenen Konturlinie entsteht.

Um eine Wechselvorrichtung 30 an den Spannkopf 20 ankoppeln zu können, weist der Spannkopf mehrere Aufnahmen 24 für Koppelglieder auf. Dabei ist insbesondere für jede Spannbacke 21 wenigstens eine Aufnahme 24 für ein Koppelglied vorgesehen. Die Aufnahmen 24 sind hier an der werkstückaufnehmenden Seite des Spannkopfes vorgesehen. Hierbei ist insbesondere die freie Stirnseite des Spannkopfes 20 geeignet.

Zur maschinenseitigen Befestigung des Spannkopfes, beispielsweise in einem Spannrohr, weist der Spannkopf 20 eine rundumlaufende Nut 25 auf, die insbesondere der formschlüssigen axialen und radialen Halterung des Spannkopfes am Spannrohr dient. Dabei wird die Spannzange durch Spannkopf und Spannrohr gebildet.

In der in Fig. 1 und 2 dargestellten Ausgangsstellung befindet sich der Spannkopf 20 in seinem Montagezustand oder in seinem Lagerzustand. Die Verbindungskörper 23 befinden sich in einem Ausgangszustand, in dem sich die gegenseitigen Kräfte kompensieren. Sofern der Spannkopf 20 an einem Spannrohr montiert ist, ist die Nut 25 des Spannkopfes 20 formschlüssig hintergriffen. Dadurch ist der Spannkopf im Spannrohr wenigstens axial gehalten. Im Gegensatz dazu ist in den Fig. 3 und 4 die Stellung gezeigt, in der die Wechselvorrichtung 30 in der Betätigungsendlage ist. Durch elastisches Verformen der Verbindungskörper 23, durch das der Außenumfang des Spannkopfes 20 vor allem im Bereich der Nut 25 verringert wird, wird die formschlüssige Verbindung zwischen Spannkopf 20 und Spannrohr aufgelöst. Der Spannkopf 20 kann dann vom Spannrohr entfernt oder in das Spannrohr eingesetzt werden.

Um diese Betätigung des Spannkopfes durchzuführen, ist die Wechselvorrichtung 30 vorgesehen. Die Wechselvorrichtung dient also zum Lösen der formschlüssigen Verbindung zwischen Spannkopf 20 und Spannrohr sowie zur Handhabe des Spannkopfes 20, soweit dieser vom Spannrohr gelöst ist.

Über die Koppelglieder 35 ist die Wechselvorrichtung 30 am Spannkopf 20 ankoppelbar. In den hier dargestellten Ausführungsformen sind die Koppelglieder 35 als Zapfen ausgebildet, die in die als Bohrung 24 ausgebildeten Aufnahmen einführbar sind.

Die Koppelglieder 35 ragen dabei in der dargestellten Ausführungsform in der in den Fig. 1 und 2 gezeigten Ausgangsstellung axial von den Schwenkarmen 33 in Richtung auf den Spannkopf 20 ab. Die Schwenkarme 33 sind über Gelenke 34 an der Trägerplatte 31 gehalten. Dabei ist die Drehachse 34 jedes Schwenkarms 33 radial außenliegend bezüglich einer Bohrung 32 in der Trägerplatte 31 angeordnet. Die Drehachse eines Gelenks 34 verläuft dabei tangential bezüglich der Bohrung. Dadurch wird es ermöglicht, dass die Schwenkarme in einer Ebene verschwenkt werden, die die Bohrungsmittelachse 37 enthält. Sie sind daher radial zur Bohrungsachse schwenkbar ausgebildet

Die Bohrung 32 durchsetzt die Trägerplatte 31. In der Bohrung 32 ist der Zugbolzen 36 geführt gehalten. Bei dem Zugbolzen 36 kann es sich, wie in der Fig. 1 bis 4 dargestellt, um ein gebautes Teil handeln, das aus einem zylindrischen Schaft besteht und einem gegenüber dem zylindrischen Schaft radial nach außen abragenden Deckel. Der Zugbolzen 36 durchsetzt die Trägerplatte und hintergreift mit dem Deckel die Schwenkarme 33. Durch das Hintergreifen der Schwenkarme können mittels des Zugbolzens 36 Zugkräfte auf die Schwenkarme 33 eingeleitet werden, so dass die Koppelglieder 35 um die Gelenke 34 verschwenkt werden und sich nach innen zu der Bohrungsmittelachse 37 hin neigen. Durch diese Schwenkbewegung erfolgt ein Verlassen der in Fig. 1 und 2 dargestellten Ausgangsstellung bis hin zu der in der Fig. 3 und 4 dargestellten Betätigungsendlage. Gegen die Wirkung der gummielastischen Verformung der Verbindungskörper 23 erfolgt ein Verformen des Spannkopfes 20, der das Lösen des Spannkopfes aus dem Spannrohr ermöglicht. Die Verformungskräfte, die in den Verbindungskörper eingeleitet werden, wirken auch als Rückstellkräfte, so dass auch über diese Kräfte eine Rückstellung von der Betätigungsendlage in der Fig. 3 bzw. 4 in die Ausgangslage der Fig. 1 erfolgt. Bei einem solchen Rückschwenken werden von den Schwenkarrnen. 33 die Kräfte vom Spannkopf 20 in die Wechselvorrichtung 30 eingeleitet und der Zugbolzen wird durch sein Hintergreifen der Schwenkarme 33 in die Ausgangslage der Fig. 1 zurückbewegt.

Damit diese Rückbewegung auch dann erfolgt, wenn kein Spannkopf 20 an der Wechselvorrichtung 30 angekoppelt ist, ist es möglich, entsprechende Rückstellfedern vorzusehen. Dabei ist es einerseits möglich, die Rückstellfeder zwischen den beiden Betätigungsmitteln, nämlich den beiden Betätigungshebeln 38 und 39, auszubilden. Des weiteren ist es möglich, entsprechende Rückstellfedern zwischen den Schwenkarmen 33 und der Trägerplatte 31 anzuordnen. Um eine gute Hebelwirkung für die Rückstellkraft zu erreichen, ist es günstig, die entsprechenden Rückstellfedern möglichst nahe zu der Bohrung 32 anzuordnen.

Auf der Rückseite der Trägerplatte 31, die von der Aufnahme für den Spannkopf 20 abgewandt ist, ist ein Widerlager 41 ausgebildet. Das Widerlager ist als eine feststehende an der Trägerplatte 31 angeordnete Scheibe ausgebildet, die ebenfalls die Bohrung 32 aufweist. Das Widerlager 41 besteht aus einem zylindrischen Körper. In dem Widerlager 41 sind Gelenkpfannen 46 eingeformt. In diesen Gelenkpfannen 46 sind Kugelköpfe 45 von Hebeln 44 gelagert. Dabei sind gemäß der Erfindung drei regelmäßig zueinander beabstandete Hebel vorgesehen. Darüber hinaus weisen das Widerlager 41 und der Drehring 43 auch Nuten auf, in denen die Hebel 44 zum Liegen kommen können, wenn Drehring 43 und Widerlager 41 in Anlage aneinander gebracht sind, wie dies in der in Fig. 1 und 3 bzw. 4 dargestellten Ausgangslage der Fall ist. Die Nuten verlaufen dabei im wesentlichen tangential zu der Bohrungsmittelachse.

Die gegenüberliegenden Enden der Hebel 44 weisen ebenfalls Kugelköpfe 45 auf, die in Gelenkpfannen 46 gehalten sind, wobei diese Gelenkpfannen an dem Drehring 43 ausgebildet sind. Der Drehring 43 ist mittels der Hebel 44 mittelbar an der Trägerplatte 31 gehalten. Die Anzahl und die Anordnung der Hebel ist dabei so bestimmt, dass der Drehring 43 bezüglich der Trägerplatte 31 um die Bohrungsmittelachse 37 herum schwenkbar ist. Mit dieser Schwenkbewegung ist jedoch eine axiale Bewegung bezüglich dieser Achse zwangsweise gekoppelt. Um eine derart führende Halterung des Drehrings bezüglich der Trägerplatte 31 lediglich über die Hebel 44 zu ermöglichen, ist es vorteilhaft, wenn wenigstens drei Hebel vorhanden sind.

Die Zahl der Hebel kann auch verringert werden, dann sind jedoch gegebenenfalls weitere Führungsmittel notwendig. Es ist dabei aber zu beachten, dass der Zugbolzen 36 auch den Drehring 43 durchsetzt, da auch der Drehring 43 eine entsprechende Bohrung aufweist und insoweit auch von diesem Zugbolzen gewisse Führungsaufgaben übemommen werden können. Dennoch ist es vorteilhaft, wenn drei Hebel 44 oder auch eine noch größere Anzahl von Hebeln 44 vorgesehen ist In diesem Fall sind die Freiheitsgrade des Drehringes 43 gegenüber der Trägerplatte 31 allein durch die Hebel 44 ausreichend bestimmt.

An der Trägerplatte 31 der Wechselvorrichtung 30 ist zumindest mittelbar der erste Betätigungshebel 38 feststehend gehalten. Er ragt im wesentlichen in radialer Richtung von der Trägerplatte 31 nach außen ab und kann darüber hinaus zur Erzielung guter Griffeigenschaften entsprechend ergonomisch geformt sein. Mit dem Drehring 43 fest verbunden ist der zweite Betätigungshebel 39, der in der in den Fig. 1 und 2 dargestellten Ausgangsstellung unter einem gewissen Winkel bezüglich des ersten Betätigungshebels 38 radial von dem Drehring 43 abragt. Der Winkel zwischen den beiden Betätigungshebeln 38 und 39 ist im wesentlichen auch dadurch nach oben begrenzt, dass die beiden Bestätigungshebel 38, 39 von einer Hand umgreifbar sein sollten, um eine Einhandbedienung und eine einhändige Manipulation der Wechselvorrichtung 30 zu ermöglichen. Auch der zweite Betätigungshebel 39 kann hinsichtlich der Griffeigenschaften ergonomisch geformt sein. Im wesentlichen kommen Formen, wie sie bei Griffen von Zangen auch Verwendung finden, hierfür besonders in Betracht.

Im Hinblick auf eine Nutzbarkeit der Wechselvorrichtung 30 sowohl mit der linken als auch mit der rechten Hand, kann es sich dabei als vorteilhaft erweisen, wenn die beiden Hebel in ihrer Form einander entsprechen. Dabei ist die Auswahl der Hand nicht nur vom Benutzer und seinen bevorzugter Gewohnheit, sondern auch von der Zugänglichkeit im Maschinenbereich abhängig.

Wird eine Betätigung der Wechselvorrichtung 30 vorgenommen, so erfolgt eine Relativbewegung zwischen dem ersten und dem zweiten Betätigungshebel aufgrund der von dem Benutzer manuell eingeleiteten Betätigungskräfte. Die durch die Betätigungskräfte eingeleitete Relativbewegung zwischen den beiden Betätigungshebeln 38, 39 führt zu einer gleichen Relativbewegung von Drehring 43 bezüglich Trägerplatte 31 mit dem Widerlager 41. Es handelt sich dabei um eine Rotationsbewegung um die Bohrungsmittelachse 37, die damit auch die Drehachse 40 zwischen Drehring und Trägerplatte 31 definiert. In diesem Fall sind die Drehachse 40 und die Bohrungsmittelachse 37 nicht nur koaxial zueinander ausgerichtet, sondern entsprechen einander.

Aufgrund der Drehbewegung und der Abstützung der Hebel 44 in beider seits angeordneten Gelenkpfannen erfolgt ein Aufbäumen der Hebel 44 zwischen Widerlager 41 und Drehring 43. Dadurch wird der axiale Abstand bezüglich der Drehachse 40 zwischen diesen beiden Teilen vergrößert. Da der Zugbolzen 36 zumindest in axialer Richtung gesehen feststehend am Drehring 43 gehalten ist, kommt es auch zu einer axialen Verschiebung des Zugbolzens in der Bohrung 32. Der Zugbolzen wird, beispielsweise durch den auf den Drehring 43 übergreifenden Kopf 42 des Zugbolzens in axialer Richtung, von dem Spannkopf 20 weggezogen. Über die Kopplung des Zugbolzens 36 mit den Schwenkarmen 33 wird somit eine Schwenkbewegung der Schwenkarme 33 erreicht. Es findet der Übergang von der in Fig. 1 und 2 dargestellten Ausgangslage in die in den Fig. 3 und 4 dargestellte Betätig ungsendlage statt. Die in der Fig. 3 bzw. 4 dargestellte Be-.. tätigungsendlage zeigt den ersten Betätigungshebel 38 und den zweiten Betätigungshebel 39 in einer Position, in der sie unmittelbar aneinander benachbart sind und aneinander anliegen, soweit ihnen dies ihre Formgebung erlaubt.

Eine solche Ausbildung mit einem Drehlager und über sich aufbäumende Hebel 44 ist in der Fig. 3 bzw. 4 zu erkennen, wobei die Hebel 44 in der Betätigungsendlage möglichst koaxial zur Drehachse 40 ausgerichtet sind. Dadurch wird es ermöglicht, dass dann, wenn die der Betätigung entgegenwirkenden Kräfte, im wesentlichen die Verformkräfte für die gummielastischen Verbindungskörper 23, am größten sind, die größte Hebelwirkung zwischen Drehring 43 und Widerlager 41 über die Hebel 44 gegeben ist. So bleiben die erforderlichen Bedienkräfte für die Betätigung der beiden Betätigungshebel 38 und 39 in angemessenen Grenzen. Über die Länge der Hebel 44 werden die Kraftübersetzung und der Kraftverlauf wesentlich mitbestimmt. Diese wird daher entsprechend der Gegebenheiten und der erforderlichen Kräfte an die Verhältnisse bei jeder einzelnen Wechselvorrichtung 30 angepasst.

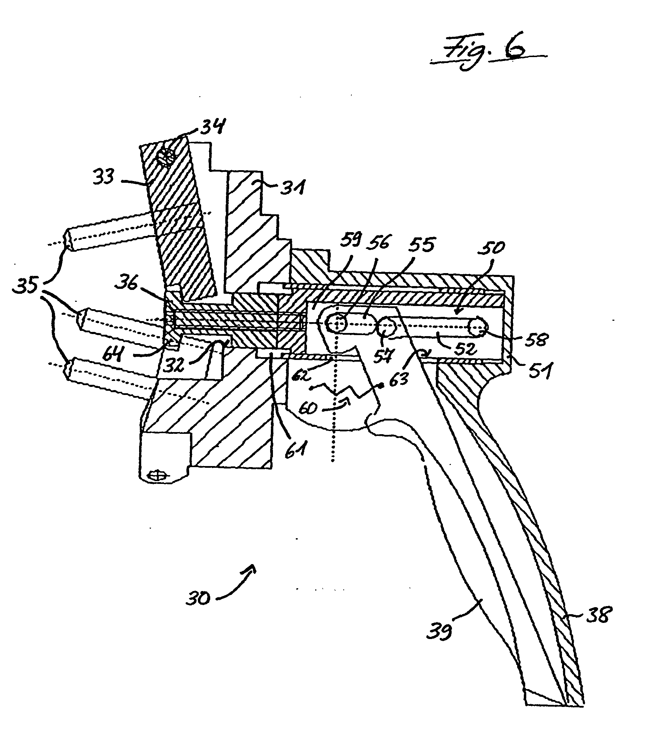

In den Fig. 5 und 6 ist eine zweite Ausführungsform einer erfindungsgemäßen Wechselvorrichtung 30 gezeigt. Bei der Ausführungsform gemäß den Fig. 5 und 6 ist die Drehachse 40 des zweiten Betätigungshebels 39 gegenüber dem ersten Betätigungshebel 38 nicht koaxial zur Bohrungsmittelachse 37, sondern stets senkrecht dazu.

Bei den Ausführungsformen gemäß der Fig. 5 und 6 entspricht die Ausgestaltung der Trägerplatte 31 und der Schwenkarme 33 samt der Anwendung der Schwenkarme 33 über die Gelenke 34 an der Trägerplatte 31 im wesentlichen der Ausführungsform gemäß den Fig. 1 bis 4, so dass dies hier nicht nochmals beschrieben wird. Auch die als Zapfen ausgebildeten Koppelelemente 35 entsprechen den Koppetstücken der Fig. 1 bis 4. Zur Verdeutlichung der Schwenkbewegung und zur Vereinfachung der Ansicht wurde in den Fig. 5 und 6 auf die erneute Darstellung eines Spannkopfes 20 verzichtet. Die Wechselvorrichtung 30 gemäß den Fig. 5 und 6 ist jedoch dazu geeignet, bei Spannköpfen, wie sie den in der Fig. 1 bis 4 dargestellten Spannköpfen 20 entsprechen, verwendet zu werden. Im übrigen ist in der Fig. 5 wiederum die unbetätigte Ausgangslage und in der Fig. 6 die entsprechende Betätigungsendlage der Wechselvorrichtung 30 gezeigt. Beide Figuren enthalten eine teilgeschnittene Darstellung in schematischer Ausführung einer entsprechenden Wechselvorrichtung.

Von der von den Schwenkarmen 33 abgewandten Rückseite der Trägerplatte 31 ragt ein zylindrisch ausgebildeter hoher Abschnitt 51 ab. Im Inneren des Rohrabschnittes ist eine Hülse 54 angeordnet. Der Rohrabschnitt ist dabei konzentrisch zu der Bohrung 32 in der Trägerplatte 31 angeordnet. Er ist an seinem hinteren, von der Trägerplatte 31 abgewandten Ende verschlossen ausgebildet. Im Inneren des Rohrabschnittes 51 ist die Hülse 54 angeordnet. Die Wandstärke der Hülse 54 sowie der Innendurchmesser des Rohrabschnittes 51 sind derart ausgebildet, dass der Innendurchmesser der Hülse 54 dem Durchmesser der Bohrung 32 entspricht. Im Bereich der Trägerplatte kann eine Aufweitung 61 der Bohrung 32 vorgesehen sein, so dass der lichte Durchmesser im Bereich der Aufweitung 61 dem Innendurchmesser des Rohrabschnittes 51 entspricht. Damit ist es also möglich, dass die Hülse 54 in den Bereich der Aufweitung 61 hineinragt.

An einer Seite von dem Rohrabschnitt 51 und im wesentlichen radial abragend ist der erste Betätigungshebel 38 ausgebildet. Dabei ist der erste Betätigungshebel insbesondere so geformt, dass eine möglichst gute Anlage in der Hand im Bereich zwischen Daumen und Handfläche gegeben ist. Der Rohrabschnitt 51 weist in dem Bereich zwischen Trägerplatte 31 und erstem Betätigungshebel 38 einen Durchbruch 63 auf, der insbesondere schlitzartig ausgebildet ist. Durch diesen Durchbruch 63 hindurch ist der zweite Betätigungshebel 39 bis ins Innere der Hülse 54 hineingeführt, die zu diesem Zwecke in diesem Bereich einen Schlitz 62 aufweist. Der zweite Betätigungshebel 39 ist über die Kniehebelanordnung 50 gehalten und um eine senkrecht zur Bildebene verlaufende Drehachse herum schwenkbar bezüglich des ersten Betätigungshebels 38 geführt. Der zweite Drehhebel ist insbesondere so ausgebildet, dass er ergonomisch günstig von den Fingern einer Hand umgriffen werden kann, die mit dem Daumen den ersten Betätigungshebel 38 hintergreift.

Die Kniehebelanordnung 50 besteht aus drei Drehpunkten. Zum einen ist dies die Drehachse, die durch den Sicherungsbolzen 58 festgelegt ist. So bildet er auch das Drehzentrum des längeren der beiden Hebelschenkel 52 an dem Sicherungsbolzen 58. Am anderen Ende des längeren Hebelschenkels 52 ist durch das Lagerauge 57 eine drehbare Verbindung zwischen dem längeren Hebelschenkel 52 und dem zweiten Betätigungshebel 39 hergestellt. Der kürzere Hebelschenkel 53 wird durch den Abstand b zwischen dem Lagerauge 57 und einem Achsbolzen 56 definiert und ist Teil des zweiten Betätigungshebels 39. Der Achsbolzen 56 durchsetzt dabei die diametral einander gegenüberliegenden Langlöcher 55 des Zugbolzens 36. Der Achsbolzen 56 definiert einen bezüglich des Rohrabschnitts 51 feststehenden Drehpunkt, da er so ausgebildet ist, dass er sowohl die Hülse 54 als auch den Rohrabschnitt 51 in entsprechende Bohrungen durchsetzt und damit die Lage bezüglich des Rohrabschnitts 51 festlegt. Der durch die Langlöcher 55 durchragende Achsbolzen begrenzt dabei den maximalen Weg des Zugbolzens 36 in dem Rohrabschnitt 51 und definiert somit die Ausgangslage und die Betätigungsgrundlage. Der zweite Betätigungshebel ragt dabei in die Ausnehmung 65 hinein, die im Zugbolzen 36 hierfür ausgebildet ist und bezüglich der die Langlöcher 55 seitlich angeordnet sind.

Zur Herstellung einer definierten Betätigungsausgangslage für den zweiten Betätigungshebel 39 ist zwischen dem Betätigungshebel 39 und der Trägerplatte 31 oder einem hierzu feststehend angeordneten Bauteil die Rückstellfeder 60 angeordnet. Diese zieht den zweiten Betätigungshebel 39 in eine Stellung, in der der zweite Betätigungshebel zwar weit, möglichst aber dennoch von einer Hand greifbar von dem ersten Betätigungshebel 38 entfernt ist. Aufgrund der Kopplung zwischen dem zweiten Betätigungshebel 39 und dem Zugbolzen 36 mittels des in dem Langloch 55 geführten Achsbolzens 56 ist dann auch eine definierte Position der Schwenkarme 33 gegeben. Die Schwenkarme 33 werden dabei in einem im Durchmesser verringerten Bereich des Zugbolzens so gehalten, dass auf diese sowohl Zug als auch Zugkräfte übertragbar sind. Hierzu ist es insbesondere vorgesehen, dass der Zugbolzen 36 im Bereich der Schwenkarme 33 einen Abschnitt aufweist, dessen Außendurchmesser geringer ist als der Außendurchmesser im Bereich der Bohrung 32 in der Trägerplatte 31, in der der Zugbolzen 36 geführt gehalten ist. Nach dem Bereich, über den hinweg die Schwenkarme 33 beidseitig von dem Achsbolzen umgriffen werden sollen, ist eine Abdeckung 64 vorgesehen, die den Außendurchmesser des Zugbolzens wieder auf das ursprüngliche Maß erweitert. Somit sind die Schwenkarme 33 so zwischen den Teilen des Zugbolzens 36 gehalten, dass von diesem sowohl Zug- als auch Schubkräfte auf den Zugbolzen 36 übertragen werden können. Bei der Abdeckung 64 kann es sich insbesondere um einen Kopf einer Schraube, oder aber ein Kopfteil handeln, das mittels einer Schraube lösbar am Zugbolzen befestigt ist.

Erfolgt eine Überführung des zweiten Betätigungshebels 39 in Richtung der in der Fig. 6 dargestellte Betätigungsendlage, so wird der zweite Betätigungshebel um sein Drehzentrum, das durch den Achsbolzen 56 definiert wird, herumgeschwenkt. Aufgrund des Abstands b, der den kürzeren Hebelschenkel 53 der Kniehebelanordnung 50 bildet, und der Führung des Zugbolzens 36 im Rohrabschnitt 51 bzw. in der Hülse 54 wird der Sicherungsbolzen 58, mittels dem das freie Ende des längeren Hebelschenkels 52 am Zugbolzen 36 befestigt ist, nach hinten von dem Spannkopf 20 weggedrückt. Die Kniehebelanordnung streckt sich bis hinein in eine Lage, in der die drei Schwenkachsen der Kniehebelanordnung wenigstens nahezu in einer Ebene liegen. Dies ist insbesondere die Mittelebene des Langlochs 55. In dieser Betätigungsendlage, wie sie in der Fig. 6 dargestellt ist, liegt der zweite Betätigungshebel nahezu vollkommen am ersten Betätigungshebel an. Dadurch wird im Laufe der Betätigung der Zugbolzen 36 nach hinten geschoben. Auch hierbei ist es so, dass die günstigste, die Hebelkraft am meisten verstärkende Hebelübersetzung zwischen dem ersten Betätigungshebel und dem zweiten Betätigungshebel dann gegeben ist, wenn die Betätigungsendlage wenigstens nahezu erreicht ist. Hier wirken auch die größten Rückstellkräfte vom Spannkopf auf das Wechselwerkzeug und die Schwenkarme 33 ein. Zur Sicherstellung der Rückstellung des zweiten Betätigungshebels in der in Fig. 5 dargestellten Ausgangslage ist die Rückstellfeder 62, die sowohl als Zug als auch als Zugfeder ausgebildet sein kann und zwischen dem zweiten Betätigungshebel 39 und der Trägerplatte 31 oder einem dazu feststehenden Bauteil verbunden ist. Bei der Rückbewegung gleitet der Zugbolzen 36 wieder im Rohrabschnitt 56 nach vorne. Dadurch, dass die Schwenkarme 33 sowohl in Zugrichtung als auch in Schubrichtung mit dem Zugbolzen 36 in Eingriff stehen, werden dann auch die Schwenkarme 33 wieder in ihre Ausgangsstellung zurückgeführt, in der sie an den Spannkopf 20 an- und abkoppelbar sind. In der in Fig. 6 dargestellten Betätigungsendlage sind die Schwenkarme 33 um ihr Gelenk 34 mit einer radialen Komponente so verschwenkt, dass die als Stehbolzen ausgebildeten Koppelglieder 35 mit ihren Spitzen aufeinander zu bewegt werden. Sie führen also eine entsprechende, die Spannbacken eines Spannkopfes zueinander verschiebende Bewegung aus, wie sie auch mit dem Wechselwerkzeug gemäß den Fig. 1 bis 4 erzeugt wird.

## Patentansprüche

1. Wechselvorrichtung (30) für Spannköpfe (20) mit mehreren Spannbacken (21), die durch radial verlaufende Schlitze (22) voneinander getrennt sind und elastisch miteinander verbunden sind, wobei:
- die Wechselvorrichtung (30) eine Trägerplatte (31) mit einer Bohrung (32) aufweist,
- bezüglich der Trägerplatte (31) axial versetzt Schwenkarme (33) konzentrisch zur Bohrung (32) und mittels eines Gelenks (34) angelenkt sind derart, dass sie radial zur Bohrungsachse (37) schwenkbar sind,
- an den Schwenkarmen (33) Koppelglieder (35) zur Kopplung der Wechselvorrichtung (30) an den Spannbacken (21) vorgesehen sind,
- ein axial beweglicher Zugbolzen (36) vorgesehen ist, der die Bohrung (32) der Trägerplatte (31) durchsetzt und an den Schwenkarmen (33) angreift,
**dadurch gekennzeichnet, dass** zur manuellen Betätigung der Wechselvorrichtung (30) Betätigungshebel (38, 39) vorgesehen sind, wobei ein erster Betätigungshebel (38) bezüglich der Trägerplatte (31) feststehend angeordnet ist und wobei ein zweiter Betätigungshebel (39) gegenüber dem ersten Betätigungshebel (38) drehbeweglich angeordnet ist und an dem Zugbolzen (36) angreift.

2. Wechselvorrichtung nach Anspruch 1, **dadurch gekennzeichnet, dass** die Betätigungshebel (38, 39) von einer Ausgangsstellung, in der die Betätigungshebel weit voneinander beabstandet sind, in eine Betätigungsendlage überführbar sind, in der die Betätigungshebel einander benachbart sind.

3. Wechselvorrichtung nach Anspruch 1 oder 2, **dadurch gekennzeichnet, dass** in einer Ausgangsstellung der Betätigungshebel (38, 39) die Wechselvorrichtung (30) über die Koppelglieder (24) mit dem Spannkopf (20) in Eingriff bringbar bzw. der Eingriff wieder aufhebbar ist und in einer Betätigungsendlage der Betätigungshebel (38, 39) der Spannkopf (20) aus seiner maschinenseitigen Halterung entfernbar ist.

4. Wechselvorrichtung nach einem der vorhergehenden Ansprüche, **dadurch gekennzeichnet, dass** der zweite Betätigungshebel (39) um eine parallel zur Bohrung verlaufende Drehachse (40) bezüglich des ersten Betätigungshebels (38) drehbar ist.

5. Wechselvorrichtung nach Anspruch 4, **dadurch gekennzeichnet, dass** der zweite Betätigungshebel (39) koaxial zur Bohrung (32) drehbar ist.

6. Wechselvorrichtung nach einem der Ansprüche 4 oder 5, **dadurch gekennzeichnet, dass** der zweite Betätigungshebel (39) von einem Drehring (43) abragt, wobei der Drehring über wenigstens zwei, insbesondere drei, einerseits am Drehring (43) und andererseits wenigstens mittelbar an der Trägerplatte (31) abgestützte Hebel (44) gehalten ist.

7. Wechselvorrichtung nach Anspruch 6, **dadurch gekennzeichnet, dass** die Hebel (44) beidseitig so gehalten sind, dass sie sich bei einer Betätigung der Betätigungshebel (38, 39) von der Ausgangsstellung in Richtung auf die Betätigungsendlage aufbäumen und den Abstand zwischen Trägerplatte (31) und Drehring (43) vergrößern.

8. Wechselvorrichtung nach einem der Ansprüche 1 bis 3, **dadurch gekennzeichnet, dass** der zweite Betätigungshebel (39) um eine senkrecht zur Bohrung (32) verlaufende Drehachse (40) bezüglich des ersten Betätigungshebels (38) drehbar ist.

9. Wechselvorrichtung nach Anspruch 8, **dadurch gekennzeichnet, dass** zwischen erstem und zweitem Betätigungshebel (38, 39) eine Kniehebelanordnung (50) ausgebildet ist.

10. Wechselvorrichtung nach Anspruch 9, **dadurch gekennzeichnet, dass** der erste Betätigungshebel (38) von einem an der Trägerplatte (31) in axialer Verlängerung der Bohrung (32) angeordneten Rohrabschnitt (51) radial abragt.

11. Wechselvorrichtung nach Anspruch 9 oder 10, **dadurch gekennzeichnet, dass** die Kniehebelanordnung (50) zwei Hebelschenkel aufweist, wobei der zweite Betätigungshebel (39) über den kürzeren der beiden Hebelschenkel (53) an dem Rohrabschnitt (51) abgestützt ist.

12. Wechselvorrichtung nach Anspruch 11, **dadurch gekennzeichnet, dass** der Zugbolzen (36) in den Rohrabschnitt (51) hineinragt und zwei parallel zueinander verlaufende, einander gegenüberliegende Langlöcher (55) sowie einen dazwischenliegenden Bereich mit einer Ausnehmung (65) aufweist, wobei der Zugbolzen (36) mittels der Langlöcher (55) bezüglich der Achsbolzen (56) axial verschiebbar gelagert ist, wobei der Achsbolzen (56) beabstandet vom Lagerauge (57) des längeren Hebelschenkels (52) den zweiten Betätigungshebel (39) durchsetzt und dieser Abstand den kürzeren Hebelschenkel (53) bildet.

13. Wechselvorrichtung nach Anspruch 11, **dadurch gekennzeichnet, dass** ein Sicherungsbolzen (58) den Zugbolzen (36) an dessen hinterem Ende durchsetzt und das Drehlager des längeren Betätigungshebels am Zugbolzen bildet.

14. Wechselvorrichtung nach einem der Ansprüche 9 bis 13, **dadurch gekennzeichnet, dass** der zweite Betätigungshebel (39) über eine abgerundete Abwälzkante an der Innenfläche einer in den Rohrabschnitt (51) eingesetzten Hülse (54) abgestützt ist.

15. Wechselvorrichtung nach einem der Ansprüche 9 bis 14, **dadurch gekennzeichnet, dass** die drei Schwenkachsen der Kniehebelanordnung (50) in der Betätigungsendlage wenigstens nahezu in einer Ebene liegen.

16. Wechselvorrichtung nach Anspruch 15, **dadurch gekennzeichnet, dass** die Ebene in der Mittelebene von Langlöchern (55) der Kniehebelanordnung (50) verläuft.

17. Wechselvorrichtung nach einem der vorhergehenden Ansprüche, **dadurch gekennzeichnet, dass** zwischen erstem und zweitem Betätigungshebel (38, 39) wenigstens eine Rückstellfeder (60) angeordnet ist, die den zweiten Betätigungshebel (39) in Richtung auf die Ausgangslage hin beaufschlagt.

18. Wechselvorrichtung nach einem der vorhergehenden Ansprüche, **dadurch gekennzeichnet, dass** die Schwenkhebel sowohl in Schubals auch in Zugrichtung am Zugbolzen (36) abgestützt sind.

## Claims

1. Exchange device (30) for grip heads (20) having a plurality of gripping jaws (21), which are separated from one another by radially extending slots (22) and are resiliently interconnected, in which:
- the exchange device (30) has a carrier plate (31) with a bore (32),
- swivel arms (33) are axially displaced in relation to the carrier plate (31), are arranged concentrically to the bore (32) and are articulated by means of a joint (34) such that they can be swivelled radially to the axis (37) of the bore,
- on the swivel arms (33) coupling elements (35) are provided for coupling the exchange device (30) to the gripping jaws (21),
- an axially movable tension bolt (36) is provided, which traverses the bore (32) in the carrier plate (31) and engages on the swivel arms (33),
**characterised in that** for the manual operation of the exchange device (30), operating levers (38, 39) are provided, a first operating lever (38) being fixed with respect to the carrier plate (31) and a second operating lever (39) being rotatable with respect to the first operating lever (38) and engaging on the tension bolt (36).

2. Exchange device according to claim 1, **characterised in that** the operating levers (38, 39) can be transferred from a starting position, in which the operating levers are spaced far apart, into an operating end position in which the operating levers are close together.

3. Exchange device according to either claim 1 or claim 2, **characterised in that** in a starting position of the operating levers (38, 39), the exchange device (30) can be engaged or disengaged again with the grip head (20) by means of the coupling members (24) and in an operating end position of the operating levers (38, 39) the grip head (20) can be removed from its machine-side holder.

4. Exchange device according to any one of the preceding claims, **characterised in that** the second operating lever (39) can be rotated about a rotation axis (40) running parallel to the bore with respect to the first operating lever (38).

5. Exchange device according to claim 4, **characterised in that** the second operating lever (39) can be rotated coaxially to the bore (32).

6. Exchange device according to either claim 4 or claim 5, **characterised in that** the second operating lever (39) projects from a swivel (43), the swirl being held by means of at least two and in particular three levers (44) supported on the one hand on the swivel (43) and on the other at least indirectly on the carrier plate (31).

7. Exchange device according to claim 6, **characterised in that** the levers (44) are bilaterally held in such a way that during an operation of the operating levers (38, 39) from the starting position in the direction of the operating end position they tilt up and increase the spacing between the carrier plate (31) and swivel (43).

8. Exchange device according to any one of claims 1 to 3, **characterised in that** the second operating lever (39) is rotatable about a rotation axis (40) perpendicular to the bore (32) with respect to the first operating lever (38).

9. Exchange device according to claim 8, **characterised in that** a toggle lever arrangement (50) is constructed between the first and second operating levers (38, 39).

10. Exchange device according to claim 9, **characterised in that** the first operating lever (38) projects radially from a pipe section (51) placed on the carrier plate (31) in the axial extension of the bore (32).

11. Exchange device according to either claim 9 or claim 10, **characterised in that** the toggle lever arrangement (50) has two lever arms, the second operating lever (39) being supported on the pipe section (51) by means of the shorter of the two lever arms (53).

12. Exchange device according to claim 11, **characterised in that** the tension bolt (36) projects into the pipe section (51) and has two parallel, mutually opposite elongated holes (55) and an intermediate area with a recess (65), the tension bolt (36) being axially displaceably mounted relative to the king pin (56) by means of the elongated holes (55), the pin (56), spaced from the bearing lug (57) of the longer lever arm (52), traversing the second operating lever (39) and said spacing forming the shorter lever arm (53).

13. Exchange device according to claim 11, **characterised in that** a safety bolt (58) traverses the rear end of the tension bolt (36) and forms the pivot bearing of the longer operating lever on the tension bolt.

14. Exchange device according to any one of claims 9 to 13, **characterised in that** the second operating lever (39) is supported by means of a rounded rolling edge on the inner face of a sleeve (54) inserted in the pipe section (51).

15. Exchange device according to any one of claims 9 to 14, **characterised in that** the three swivel axes of the toggle lever arrangement (50) in the operating end position are at least approximately in one plane.

16. Exchange device according to claim 15, **characterised in that** the plane extends in the median plane of the elongated holes (55) of the toggle lever arrangement (50).

17. Exchange device according to one of the preceding claims, **characterised in that** between the first and second operating levers (38, 39) is provided at least one return spring (60), which urges the second operating lever (39) in the direction of the starting position.

18. Exchange device according to one of the preceding claims, **characterised in that** the swivel levers are supported on the tension bolt (36) in both the push and pull directions.

## Revendications

1. Dispositif (30) de changement de têtes de serrage (20) comportant plusieurs mâchoires de serrage (21) qui sont séparées les unes des autres par des fentes (22) s'étendant radialement et qui sont reliées élastiquement les unes aux autres, dans lequel
- le dispositif de changement (30) comprend une plaque porteuse (31) pourvue d'un perçage (32),
- des bras pivotants (33) décalés axialement par rapport à la plaque porteuse (31) sont articulés concentriquement au perçage (32) et au moyen d'une articulation (34) de manière à pouvoir pivoter radialement par rapport à l'axe de perçage (37),
- des organes de couplage (35) destinés à coupler le dispositif de changement (30) aux mâchoires de serrage (21) sont prévus sur les bras pivotants (33),
- il est prévu un goujon de traction (36) axialement mobile qui traverse le perçage (32) de la plaque porteuse (31) et qui engage les bras pivotants (33),
**caractérisé en ce que** pour l'actionnement manuel du dispositif de changement (30), il est prévu des leviers d'actionnement (38, 39), un premier levier d'actionnement (38) étant agencé stationnaire par rapport à la plaque porteuse (31) et un second levier d'actionnement (39) étant agencé mobile en rotation par rapport au premier levier d'actionnement (38) et engage le goujon de traction (36).

2. Dispositif de changement selon la revendication 1, **caractérisé en ce que** les leviers d'actionnement (38, 39) sont transférables depuis une position de départ dans laquelle les leviers d'actionnement sont largement espacés l'un de l'autre, jusque dans une position de fin d'actionnement dans laquelle les leviers d'actionnement sont voisins l'un de l'autre.

3. Dispositif de changement selon la revendication 1 ou 2, **caractérisé en ce que** dans une position de départ des leviers d'actionnement (38, 39), le dispositif de changement (30) est susceptible d'être amené en engagement avec la tête de serrage (20) via les organes de couplage (24) ou d'être dégagé de ladite tête, et **en ce que** dans une position de fin d'actionnement des leviers d'actionnement (38, 39), la tête de serrage (20) est détachable de sa monture côté machine.

4. Dispositif de changement selon l'une des revendications précédentes, **caractérisé en ce que** le second levier d'actionnement (39) est mobile en rotation, par rapport au premier levier d'actionnement (38), autour d'un axe de rotation (40) parallèle au perçage.

5. Dispositif de changement selon la revendication 4, **caractérisé en ce que** le second levier d'actionnement (39) est mobile en rotation coaxialement au perçage (32).

6. Dispositif de changement selon l'une des revendications 4 ou 5, **caractérisé en ce que** le second levier d'actionnement (39) fait saillie d'un anneau rotatif (43), l'anneau rotatif étant retenu par au moins deux, en particulier par trois leviers (44) prenant appui d'une part contre l'anneau rotatif (43) et d'autre part au moins indirectement contre la plaque porteuse (31).

7. Dispositif de changement selon la revendication 6, **caractérisé en ce que** les leviers (44) sont retenus de part et d'autre de telle sorte que lors d'un actionnement des leviers d'actionnement (38, 39) depuis la position de départ vers la position de fin d'actionnement, ils fléchissent et augmentent la distance entre la plaque porteuse (31) et l'anneau rotatif (43).

8. Dispositif de changement selon l'une des revendications 1 à 3, **caractérisé en ce que** le second levier d'actionnement (39) est mobile en rotation, par rapport au premier levier d'actionnement (38), autour d'un axe de rotation (40) s'étendant perpendiculairement au perçage (32).

9. Dispositif de changement selon la revendication 8, **caractérisé en ce qu'**un agencement de leviers à genouillère (50) est réalisé entre le premier et le second levier d'actionnement (38, 39).

10. Dispositif de changement selon la revendication 9, **caractérisé en ce que** le premier levier d'actionnement (38) fait saillie radialement d'un tronçon tubulaire (51) agencé sur la plaque porteuse (31) en prolongement axial du perçage (32).

11. Dispositif de changement selon la revendication 9 ou 10, **caractérisé en ce que** l'agencement de leviers à genouillère (50) comprend deux branches de levier, le second levier d'actionnement (39) étant supporté sur le tronçon tubulaire (51) via la plus courte des deux branches de levier (53).

12. Dispositif de changement selon la revendication 11, **caractérisé en ce que** le goujon de traction (36) pénètre dans le tronçon tubulaire (51) et présente deux trous oblongs (55) parallèles l'un à l'autre et opposés l'un à l'autre, ainsi qu'une zone intermédiaire pourvue d'un évidement (65), le goujon de traction (36) étant monté en translation axiale par rapport aux goujons d'axe (56) au moyen des trous oblongs (55), le goujon d'axe (56) traversant le second levier d'actionnement (39) à distance de l'oeillet de montage (57) de la branche de levier plus longue (52), cette distance formant la branche de levier plus courte (53).

13. Dispositif de changement selon la revendication 11, **caractérisé en ce qu'**un goujon de sécurité (58) traverse le goujon de traction (36) à son extrémité arrière et forme le palier de rotation du levier d'actionnement plus long sur le goujon de traction.

14. Dispositif de changement selon l'une des revendications 9 à 13, **caractérisé en ce que** le second levier d'actionnement (39) est supporté via une arête de déroulement arrondie sur la surface intérieure d'une douille (54) mise en place dans le tronçon tubulaire (51).

15. Dispositif de changement selon l'une des revendications 9 à 14, **caractérisé en ce que** dans la position de fin d'actionnement les trois axes de pivotement de l'agencement de leviers à genouillère (50) se trouvent au moins approximativement dans un seul plan.

16. Dispositif de changement selon la revendication 15, **caractérisé en ce que** le plan s'étend dans le plan médian des trous oblongs (55) de l'agencement de leviers à genouillère (50).

17. Dispositif de changement selon l'une des revendications précédentes, **caractérisé en ce qu'**il est prévu entre le premier et le second levier d'actionnement (38, 39) au moins un ressort de rappel (60) qui sollicite le second levier d'actionnement (39) dans la direction de la position de départ.

18. Dispositif de changement selon l'une des revendications précédentes, **caractérisé en ce que** les leviers pivotants sont supportés sur le goujon de traction (36) aussi bien dans la direction de poussée que dans la direction de traction.
